# EUROPÄISCHE PATENTANMELDUNG

(11) **EP 1 908 978 A2**
(43) Veröffentlichungstag der Anmeldung: **09.04.2008**
(21) Anmeldenummer: 07018772.9
(22) Anmeldetag: 25.09.2007
(51) Int. Cl.: F16D 25/0638, F16D 25/12

(54) **Kupplungsanordnung für ein Fahrzeug**

(30) Priorität: 06.10.2006 DE 102006047295
(71) Anmelder: ZF Friedrichshafen AG, 88038 Friedrichshafen (DE)
(72) Erfinder: Sudau, Jörg, 97464 Niederwerrn (DE); Sasse, Christoph, Dr., 97422 Schweinfurt (DE); Schröder, Arthur, 97456 Hambach (DE); Lotze, Rüdiger, 97424 Schweinfurt (DE)

(57) **Zusammenfassung**

Eine Kupplungsanordnung für ein Fahrzeug umfasst eine mit einem Antriebsorgan zur Drehung um eine Drehachse (A) zu verbindende und mit Fluid gefüllte oder füllbare Gehäuseanordnung (12), eine über einen ersten Reibelemententräger (24) mit der Gehäuseanordnung (12) zur Drehung um die Drehachse (A) gekoppelte erste Gruppe (28) von Reibelementen, eine über einen zweiten Reibelemententräger (30) mit einem Abtriebsorgan (36) zur Drehung um die Drehachse (A) zu koppelnde zweite Gruppe (40) von Reibelementen, ein Kolbenelement, durch welches die Reibelemente (26) der ersten Gruppe (28) von Reibelementen und die Reibelemente (38) der zweiten Gruppe (40) von Reibelementen in Reibeingriff bringbar sind, wobei am ersten Reibelemententräger (24) oder am zweiten Reibelemententräger (30) eine Widerlageranordnung (44) vorgesehen ist zur Erzeugung einer Abstützwirkung für die durch das Kolbenelement (42) beaufschlagten Reibelemente (26, 38), wobei im Kraftweg zwischen dem Kolbenelement (42) und der Widerlageranordnung (44) eine elastische Anordnung (38; 60, 62; 64; 66) vorgesehen ist, welche bei Beaufschlagung der Reibelemente (26, 38) durch das Kolbenelement (42) axial komprimierbar ist.

## Beschreibung

Die vorliegende Erfindung betrifft eine Kupplungsanordnung für ein Fahrzeug, umfassend eine mit einem Antriebsorgan zur Drehung um eine Drehachse zu verbindende und mit Fluid gefüllte oder füllbare Gehäuseanordnung, eine über einen ersten Reibelemententräger mit der Gehäuseanordnung zur Drehung um die Drehachse gekoppelte erste Gruppe von Reibelementen, eine über einen zweiten Reibelemententräger mit einem Abtriebsorgan zur Drehung um die Drehachse zu koppelnde zweite Gruppe von Reibelementen, ein Kolbenelement, durch welches die Reibelemente der ersten Gruppe von Reibelementen und die Reibelemente der zweiten Gruppe von Reibelementen in Reibeingriff bringbar sind, wobei am ersten Reibelemententräger oder am zweiten Reibelemententräger eine Widerlageranordnung vorgesehen ist zur Erzeugung einer Abstützwirkung für die durch das Kolbenelement beaufschlagten Reibelemente.

Bei derartigen auch als nasslaufende Kupplungen oder nasslaufende Lamellenkupplungen bekannten Kupplungsanordnungen ist es bekannt, zum Verbessern des Schließvorgangs, d.h. zum Bereitstellen einer definierten Schließbewegung bei entsprechender Druckbeaufschlagung des Kolbenelements, ein als Tellerfeder ausgebildetes Federelement vorzusehen, welches beim Einkuppelvorgang wirksam ist, indem es zwischen dem Kolbenelement und dem durch dieses beaufschlagte Reibelement eine Vorspannwirkung erzeugt. Gegen diese Vorspannwirkung muss das Kolbenelement sich verschieben, um das Reibelement beaufschlagen zu können und somit die Reibwechselwirkung zwischen den verschiedenen Reibelementen erzeugen zu können. Dieses Federelement, welches keine bzw. keine wesentliche eine Einrückkraft übertragende Wechselwirkung zwischen dem Kolbenelement und dem durch dieses beaufschlagte Reibelement erzeugt, führt zu dem Problem, dass auf Grund seiner ringartig geschlossenen Ausgestaltung die Durchströmbarkeit der die verschiedenen Reibelemente enthaltenden Gehäuseanordnung beeinträchtigt wird und mithin Probleme bei der durch Fluidzirkulation zu erzielenden Kühlung der Reibelemente entstehen können.

Es ist die Aufgabe der vorliegenden Erfindung, eine Kupplungsanordnung für ein Fahrzeug vorzusehen, bei welcher der Schließvorgang der Kupplung ohne Beeinträchtigung der Fluiddurchströmbarkeit der Gehäuseanordnung verbessert durchgeführt werden kann.

Erfindungsgemäß wird diese Aufgabe gelöst durch eine Kupplungsanordnung für ein Fahrzeug, umfassend eine mit einem Antriebsorgan zur Drehung um eine Drehachse zu verbindende und mit Fluid gefüllte oder füllbare Gehäuseanordnung, eine über einen ersten Reibelemententräger mit der Gehäuseanordnung zur Drehung um die Drehachse gekoppelte erste Gruppe von Reibelementen, eine über einen zweiten Reibelemententräger mit einem Abtriebsorgan zur Drehung um die Drehachse zu koppelnde zweite Gruppe von Reibelementen, ein Kolbenelement, durch welches die Reibelemente der ersten Gruppe von Reibelementen und die Reibelemente der zweiten Gruppe von Reibelementen in Reibeingriff bringbar sind, wobei am ersten Reibelemententräger oder am zweiten Reibelemententräger eine Widerlageranordnung vorgesehen ist zur Erzeugung einer Abstützwirkung für die durch das Kolbenelement beaufschlagten Reibelemente, wobei im Kraftweg zwischen dem Kolbenelement und der Widerlageranordnung eine elastische Anordnung vorgesehen ist, welche bei Beaufschlagung der Reibelemente durch das Kolbenelement axial komprimierbar ist.

Bei dem erfindungsgemäßen Aufbau einer Kupplungsanordnung ist also die elastische Wirkung direkt in den Kraftabstützweg zwischen dem Kolbenelement und der Widerlageranordnung integriert. Es ist kein zusätzliches bzw. parallel zum Kolbenelement wirksames Federelement erforderlich, so dass auch eine Beeinträchtigung der Umströmbarkeit der Reibelemente mit dem in der Gehäuseanordnung enthaltenen Fluid vermieden werden kann.

Beispielsweise kann die elastische Anordnung wenigstens ein tellerartig geschirmtes Reibelement der ersten Gruppe von Reibelementen oder/und der zweiten Gruppe von Reibelementen umfassen. Durch diese tellerartig geschirmte Ausgestaltung wird bei Erzeugen einer Anpresskraft jedes derartig geschirmte Reibelement unter Bereitstellung einer Gegenkraft axial komprimiert.

Vorzugsweise ist dabei vorgesehen, dass alle Reibelemente der ersten Gruppe von Reibelementen oder alle Reibelemente der zweiten Gruppe von Reibelementen tellerartig geschirmt sind. Auf diese Art und Weise kann die elastische Wirkung einer Mehrzahl von Reibelementen kombiniert werden, so dass jedes einzelne derartig tellerartig geschirmte Reibelement nur vergleichsweise gering geschirmt sein muss und gleichwohl durch die Summe der Einzelelastizitäten eine vergleichsweise große axiale Elastizität in die Gruppen von Reibelementen integriert werden kann.

Bei einer besonders vorteilhaften Ausgestaltungsform wird vorgeschlagen, dass die Reibelemente der ersten Gruppe von Reibelementen oder die Reibelemente der zweiten Gruppe von Reibelementen an beiden axialen Seiten Reibbeläge aufweisen und dass das wenigstens eine tellerartig geschirmte Reibelement ein Reibelement mit Reibbelägen ist.

Die Widerlageranordnung kann ein über ein Axialsicherungselement bezüglich eines Reibelemententrägers abgestütztes und die Reibelemente axial abstützendes, axial elastisches Ringelement umfassen, welches dann wenigstens einen Teil der elastischen Anordnung bildet.

Bei einer weiteren Ausgestaltungsvariante der erfindungsgemäßen Kupplungsanordnung kann vorgesehen sein, dass ein Reibelement der ersten Gruppe von Reibelementen oder der zweiten Gruppe von Reibelementen zwei Scheibenteile umfasst, wobei ein erstes der Scheibenteile im Wesentlichen planar ausgebildet ist und eine Reibfläche bereitstellt und ein zweites der Scheibenteile tellerartig geschirmt ausgebildet ist und über ein Axialsicherungselement bezüglich eines Reibelemententrägers axial abgestützt ist und wenigstens einen Teil der elastischen Anordnung bildet.

Weiter kann das Kolbenelement die Reibelemente über ein wellenartig ausgebildetes, axial elastisches Ringelement beaufschlagen, welches dann wenigstens einen Teil der elastischen Anordnung bildet. Dieses Ringelement kann mit einem Reibelemententräger im Wesentlichen drehfest sein, mit welchem ein mit diesem Ringelement auch in Kontakt stehendes Reibelement im Wesentlichen drehfest ist. Es wird somit zwischen diesem Reibelement und dem damit in Kontakt stehenden Ringelement lediglich eine Axialabstützwirkung, jedoch keine Umfangsbewegung erzeugt.

Die vorliegende Erfindung wird nachfolgend mit Bezug auf die beiliegenden Zeichnungen beschrieben. Es zeigt:
- Fig. 1: eine Teil-Längsschnittansicht einer Kupplungsanordnung;
- Fig. 2: eine teilweise im Schnitt dargestellte Ansicht eines bei der Kupplungsanordnung der Fig. 1 eingesetzten Reibelements;
- Fig. 3: eine vergrößerte Detailansicht eines Teils einer alternativ ausgestalteten Kupplungsanordnung;
- Fig. 4: eine der Fig. 3 entsprechende Ansicht einer weiteren alternativen Ausgestaltungsform;
- Fig. 5: eine der Fig. 3 entsprechende Ansicht einer weiteren alternativen Ausgestaltungsform.

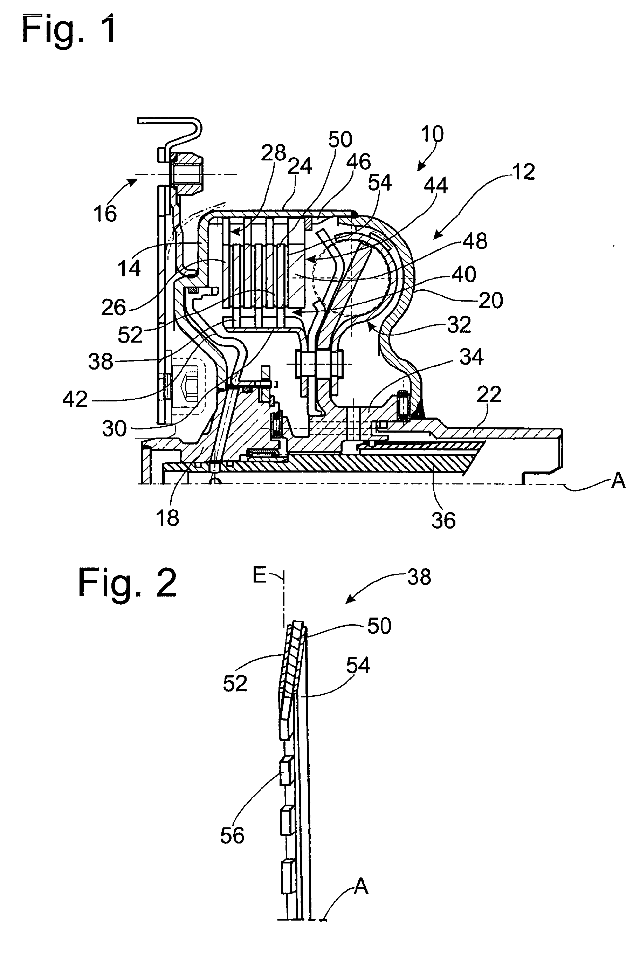

In Fig. 1 ist eine allgemein mit 10 bezeichnete Kupplungsanordnung dargestellt. Diese umfasst eine Gehäuseanordnung 12 mit einer motorseitigen Gehäuseschale 14, die über eine Kopplungsanordnung 16 mit einer als Antriebsorgan wirksamen Kurbelwelle oder dergleichen drehfest gekoppelt ist. Radial innen ist die motorseitige Gehäuseschale 14 mit einer Gehäusenabe 18 beispielsweise durch Verschweißung fest verbunden. Diese Gehäusenabe 18 kann an dem Antriebsorgan radial abgestützt werden. Die Gehäuseanordnung 12 umfasst ferner eine getriebeseitige Gehäuseschale 20, die radial außen mit der motorseitigen Gehäuseschale 14 durch Verschweißung fest verbunden ist und die radial innen mit einer Antriebsnabe 22 durch Verschweißung fest verbunden ist, welche im zusammengefügten Zustand eines Antriebsstrangs in ein Getriebe eingreift und dort eine Fluidpumpe antreiben kann.

Die Gehäuseschale 14 bildet mit ihrem radial äußeren Bereich einen ersten Reibelemententräger 24, mit welchem Reibelemente 26 einer ersten Gruppe 28 von Reibelementen durch verzahnungsartigen Eingriff drehfest gekoppelt sind, bezüglich diesem jedoch axial verlagerbar sind. Ein zweiter Reibelemententräger 30 ist über eine Torsionsschwingungsdämpferanordnung 32 mit einer Abtriebsnabe 34 gekoppelt, welche wiederum mit einem Abtriebsorgan 36, also beispielsweise einer Getriebeeingangswelle, durch Verzahnungseingriff drehfest ist. Reibelemente 38 einer zweiten Gruppe 40 von Reibelementen sind durch Verzahnungseingriff mit dem zweiten Reibelemententräger 30 drehfest, bezüglich diesem jedoch axial verlagerbar verbunden. Man erkennt, dass bei dieser Anordnung jeweils ein Reibelement 26 der ersten Gruppe 28 von Reibelementen und ein Reibelement 38 der zweiten Gruppe 40 von Reibelementen einander abwechseln.

Ein bezüglich der Gehäuseanordnung 12 abgestütztes und axial verlagerbares Kolbenelement 42 kann in seinem radial äußeren Bereich bei Axialverlagerung die Reibelemente 26 bzw. 38 axial gegeneinander pressen, wobei eine Widerlageranordnung 44 eine Reaktionskraftabstützung erzeugt. Diese Widerlageranordnung 44 umfasst einen am ersten Gehäuse 14 bzw. am ersten Reibelemententräger 24 festgelegten Sicherungsring 46, an welchem ein auch als Reibelement 26 der ersten Gruppe 28 von Reibelementen wirksames Scheibenelement 48 axial abgestützt ist.

Zur Drehmomentübertragung von der Gehäuseanordnung 12 auf die Abtriebsnabe 34 wird also das Kolbenelement 42 in der Darstellung der Fig. 1 nach rechts verlagert, so dass es das erste Reibelement 26 der ersten Gruppe 28 von Reibelementen beaufschlagt und dieses gegen das folgende Reibelement 38 der zweiten Gruppe 40 von Reibelementen presst. Auf diese Art und Weise werden die Reibelemente 26, 38 unter Erzeugung der Abstützwirkung der Abstützanordnung 44 gegeneinander gepresst und entfalten somit mit der dadurch erzeugten Reibwechselwirkung eine Drehmomentübertragungsfunktion.

Man erkennt in Fig. 1 weiter, dass die Reibelemente 26 der ersten Gruppe 28 von Reibelementen als im Wesentlichen planar ausgebildete Scheibenteile, beispielsweise hergestellt aus Blechmaterial, aufgebaut sind. Die Reibelemente 38 der zweiten Gruppe 40 von Reibelementen umfassen einen beispielsweise ähnlich wie die Reibelemente 26 ausgebildeten scheibenartigen Reibbelagträger 50, der an beiden axialen Seiten ringartige oder ringsegmentartige Reibbeläge 52, 54 trägt. Es wechselt somit immer ein ohne Reibbeläge ausgestaltetes Reibelement 26 der ersten Gruppe 28 von Reibelementen sich mit einem mit den Reibbelägen 52, 54 ausgestalteten Reibelement 38 der zweiten Gruppe von Reibelementen 40 ab.

Ein derartiges Reibelement 38 der zweiten Gruppe 40 von Reibelementen ist in Fig. 2 vergrößert und im Schnitt dargestellt. Man erkennt den ringartigen Reibbelagträger 50, der an seinem Innenumfangsbereich der Verzahnung 56 zur Drehkopplung mit dem zweiten Reibelemententräger 30 aufweist. In seinem radial auf die Verzahnung 56 folgenden ringartigen Bereich trägt dieser Reibbelagträger 50 an beiden axialen Seiten die Reibbeläge 52, 54 beispielsweise durch Verklebung. Man erkennt weiter, dass das Reibelement 38 nicht planar ausgestaltet ist, sondern im nicht kraftbeaufschlagten Zustand tellerartig geschirmt ist. Dies bedeutet, dass dieses Reibelement 38 bezüglich einer zu einer Drehachse A im Wesentlichen orthogonal stehenden Ebene E einen Winkel einschließt. Bei axialer Belastung, also bei Durchführen eines Einkuppelvorgangs tritt ein derartiges Reibelement 38 mit einem der unmittelbar neben diesem liegenden Reibelement 26 der ersten Gruppe 28 von Reibelementen in seinem radial äußeren Bereich in Kontakt und tritt mit dem an der anderen axialen Seite liegenden Reibelement 26 an seinem radial inneren Bereich in Kontakt. Auf Grund der inhärenten Elastizität des Reibbelagträgers 50 wird bei der Beaufschlagung durch das Kolbenelement 42 ein derartiges Reibelement 38 unter Erzeugung einer Gegenkraft komprimiert. Da vorzugsweise alle Reibelemente 38 der zweiten Gruppe 40 von Reibelementen mit derartiger tellerartig geschirmter Formgebung bereitgestellt sind, summieren sich deren Elastizitäten, so dass in den Kraftabstützweg zwischen der Widerlageranordnung 44, insbesondere dem Sicherungsring 46 derselben, und dem Kolbenelement 42 eine axiale Elastizität unter Bereitstellung der bereits angesprochenen Gegenkraft integriert ist. Auf diese Art und Weise wird es möglich, bei Durchführung von Einkuppelvorgängen das Kolbenelement 42 gegen eine definierte Elastizität bzw. Gegenkraft wirken zu lassen, wodurch die Präzision, mit welcher derartige Einkuppelvorgänge und entsprechend auch Auskuppelvorgänge durchgeführt werden können, deutlich erhöht werden kann. Die Reibelemente 38 der zweiten Gruppe 40 von Reibelementen stellen hier also eine im Abstützweg zwischen dem Kolbenelement 42 und der Widerlageranordnung 44 wirksame elastische Anordnung bereit.

Es sei hier darauf hingewiesen, dass es selbstverständlich auch möglich wäre, die Reibelemente 26 der ersten Gruppe 28 von Reibelementen, also diejenigen Reibelemente, die ohne Reibbeläge ausgestaltet sind, tellerartig geschirmt bereitzustellen bzw. Reibbeläge auch oder nur an den mit dem ersten Reibelemententräger 24 zusammenwirkenden Reibelementen 26 vorzusehen und ggf. dann diese Reibelemente 26 tellerartig geschirmt auszugestalten.

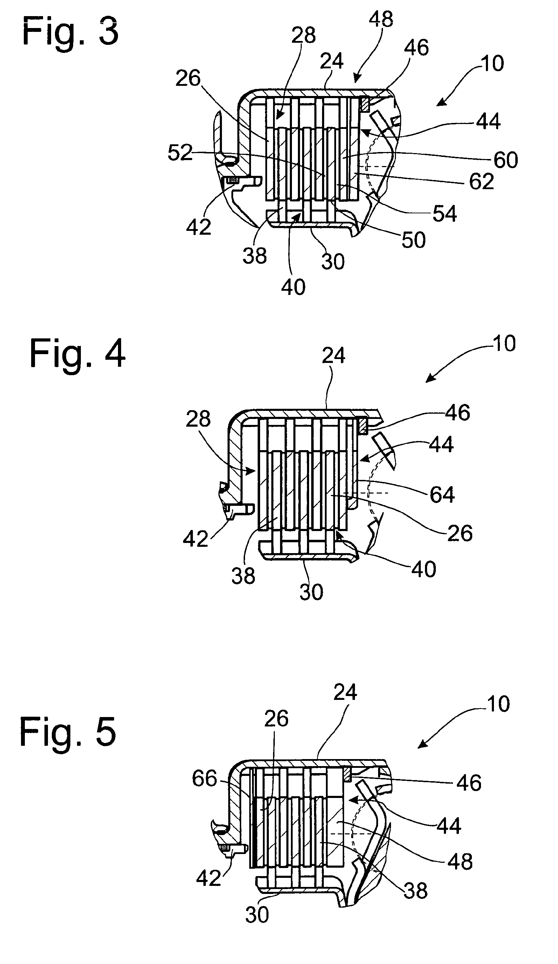

Eine abgewandelte Ausgestaltungsform einer Kupplungsanordnung 10, deren Aufbau grundsätzlich so sein kann, wie in Fig. 1 gezeigt, ist in Fig. 3 dargestellt. Man erkennt hier wieder die beiden Reibelemententräger 24, 30 und die damit drehfesten Reibelemente 26, 38 der beiden Gruppen 28, 40 von Reibelementen.

Bei der in Fig. 3 dargestellten Ausgestaltungsform ist das Scheibenteil 48, welches als axial letztes Reibelement 26 der ersten Gruppe 28 von Reibelementen und auch als Teil der Abstützanordnung 44 interpretiert werden kann, in zwei Einzelscheiben 60, 62 aufgegliedert. Dabei kann die mit einem Reibelement 38 der zweiten Gruppe 40 von Reibelementen zusammenwirkende Einzelscheibe 60 planar ausgebildet sein und kann beispielsweise identisch ausgebildet sein, wie die anderen Reibelemente 26 dieser Gruppe 28 von Reibelementen. Die andere Einzelscheibe 62 kann dann tellerartig geschirmt ausgebildet sein, so dass insbesondere die Einzelscheibe 60 in ihrem radial Inneren, also vom Reibelemententräger 24 radial entfernt liegenden Bereich abgestützt ist. Bei Beaufschlagung durch das Kolbenelement 42 kann die Einzelscheibe 62 axial einfedern und mithin die angesprochene Elastizität bereitstellen. Auch die Einzelscheibe 62 kann bis auf den Unterschied der tellerartigen Schirmung identisch aufgebaut sein, wie die anderen Reibelemente 26 der ersten Gruppe 28, was einen Kostenvorteil bei der Herstellung mit sich bringen kann.

Bei der in Fig. 4 dargestellten Ausgestaltungsvariante umfasst die Widerlageranordnung 44 ein ringartiges, axial elastisches Abstützelement 64, das im radial von dem Reibelemententräger 24 entfernt liegenden Bereich, also seinem radial inneren Bereich, das axial letzte Reibelement 26 der ersten Gruppe 28 von Reibelementen stützt, und radial außen, also dort wo es beispielsweise mit dem Reibelemententräger 24 auch drehfest gekoppelt ist, axial am Sicherungsring 46 abgestützt ist. Dieses ringartige Abstützelement 64 kann als Blechteil durch Umformung bereitgestellt werden, kann aber ebenso auch als durch Drehbearbeitung hergestelltes Ringteil ausgebildet sein. Die Reibelemente 26 und 38 der beiden Gruppen 28 und 40 können bei dieser Ausgestaltungsvariante dann alle im Wesentlichen planar, also ohne tellerartige Schirmung, ausgebildet sein.

In Fig. 5 ist eine Ausgestaltungsvariante gezeigt, bei welcher die im Kraftabstützweg zwischen dem Kolbenelement 42 und der Widerlageranordnung 44 vorhandene elastische Anordnung im Wesentlichen bereitgestellt ist durch ein ringartiges und in Umfangsrichtung gewelltes Federelement 66. Dieses stützt sich an dem axial ersten, also unmittelbar auf das Kolbenelement 42 folgenden Reibelement 26 ab und steht radial außen mit dem Reibelemententräger 24 in Drehmitnahmeeingriff. Dieses als Wellfeder also ausgestaltete ringartige Federelement 66 wird an seinen vom unmittelbar folgenden Reibelement 26 entfernt liegenden Wellenscheiteln vom Kolbenelement 42 beaufschlagt und presst mit seinen dem unmittelbar folgenden Reibelement 26 nahe liegenden Wellenscheiteln gegen dieses. Auch auf diese Art ist, ohne dass zwischen dem ringartigen Federelement 66 und dem dadurch beaufschlagten Reibelement 26 eine Reibwirkung erzeugt wird, eine axiale Elastizität in den Krafübertragungsweg zwischen dem Kolbenelement 42 und der Abstützanordnung 44 integriert.

Es sei abschließend darauf hingewiesen, dass selbstverständlich die verschiedenen Aspekte des Bereitstellens einer elastischen Anordnung im Kraftweg zwischen dem Kolbenelement und der Abstützanordnung miteinander kombiniert werden können bzw. dass das Zusammenwirken mit den beiden Reibelemententrägern 24, 30 vertauscht werden kann. Von besonderem Vorteil bei den gezeigten Ausgestaltungsformen ist jedoch, dass das Kolbenelement 42, das mit der Gehäuseanordnung 12 im Wesentlichen drehfest sein kann, auch mit einem Bauteil unmittelbar zusammenwirkt, das ebenfalls mit der Gehäuseanordnung 12 drehfest ist, also beispielsweise einem Reibelement 26 oder bei der Ausgestaltungform der Fig. 5 dem ringartigen Federelement 66. Von weiterem Vorteil ist, dass die Widerlageranordnung bezüglich der Gehäuseanordnung 12 wirksam ist und somit der über die Torsionsschwingungsdämpferanordnung 32 mit der Abtriebsnabe 34 verbundene Reibelemententräger 30 von Axialkräften im Wesentlichen freigehalten werden kann.

## Patentansprüche

1. Kupplungsanordnung für ein Fahrzeug, umfassend:
- eine mit einem Antriebsorgan zur Drehung um eine Drehachse (A) zu verbindende und mit Fluid gefüllte oder füllbare Gehäuseanordnung (12),
- eine über einen ersten Reibelemententräger (24) mit der Gehäuseanordnung (12) zur Drehung um die Drehachse (A) gekoppelte erste Gruppe (28) von Reibelementen,
- eine über einen zweiten Reibelemententräger (30) mit einem Abtriebsorgan (36) zur Drehung um die Drehachse (A) zu koppelnde zweite Gruppe (40) von Reibelementen,
- ein Kolbenelement, durch welches die Reibelemente (26) der ersten Gruppe (28) von Reibelementen und die Reibelemente (38) der zweiten Gruppe (40) von Reibelementen in Reibeingriff bringbar sind,
wobei am ersten Reibelemententräger (24) oder am zweiten Reibelemententräger (30) eine Widerlageranordnung (44) vorgesehen ist zur Erzeugung einer Abstützwirkung für die durch das Kolbenelement (42) beaufschlagten Reibelemente (26, 38), wobei im Kraftweg zwischen dem Kolbenelement (42) und der Widerlageranordnung (44) eine elastische Anordnung (38; 60, 62; 64; 66) vorgesehen ist, welche bei Beaufschlagung der Reibelemente (26, 38) durch das Kolbenelement (42) axial komprimierbar ist.

2. Kupplungsanordnung nach Anspruch 1,
**dadurch gekennzeichnet, dass** die elastische Anordnung (38) wenigstens ein tellerartig geschirmtes Reibelement (38) der ersten Gruppe (28) von Reibelementen oder/und der zweiten Gruppe (40) von Reibelementen umfasst.

3. Kupplungsanordnung nach Anspruch 2,
**dadurch gekennzeichnet, dass** alle Reibelemente (26) der ersten Gruppe (28) von Reibelementen oder alle Reibelemente (38) der zweiten Gruppe (40) von Reibelementen tellerartig geschirmt sind.

4. Kupplungsanordnung nach Anspruch 2 oder 3,
**dadurch gekennzeichnet, dass** die Reibelemente (26) der ersten Gruppe (28) von Reibelementen oder die Reibelemente (38) der zweiten Gruppe (40) von Reibelementen an beiden axialen Seiten Reibbeläge (52, 54) aufweisen und dass das wenigstens eine tellerartig geschirmte Reibelement (38) ein Reibelement (38) mit Reibbelägen (52, 54) ist.

5. Kupplungsanordnung nach einem der Ansprüche 1 bis 4,
**dadurch gekennzeichnet, dass** die Widerlageranordnung (44) ein über ein Axialsicherungselement (46) bezüglich eines Reibelemententrägers (24) abgestütztes und die Reibelemente (26, 38) axial abstützendes, axial elastisches Ringelement (64) umfasst, welches wenigstens einen Teil der elastischen Anordnung bildet.

6. Kupplungsanordnung nach einem der Ansprüche 1 bis 5,
**dadurch gekennzeichnet, dass** ein Reibelement (26) der ersten Gruppe (28) von Reibelementen oder der zweiten Gruppe (40) von Reibelementen zwei Scheibenteile (60, 62) umfasst, wobei ein erstes (60) der Scheibenteile (60, 62) im Wesentlichen planar ausgebildet ist und eine Reibfläche bereitstellt und ein zweites (62) der Scheibenteile (60, 62) tellerartig geschirmt ausgebildet ist und über ein Axialsicherungselement (46) bezüglich eines Reibelemententrägers (24) axial abgestützt ist und wenigstens einen Teil der elastischen Anordnung bildet.

7. Kupplungsanordnung nach einem der Ansprüche 1 bis 6,
**dadurch gekennzeichnet, dass** das Kolbenelement (42) die Reibelemente (26, 38) über ein wellenartig ausgebildetes, axial elastisches Ringelement (66) beaufschlagt, welches wenigstens einen Teil der elastischen Anordnung bildet.

8. Kupplungsanordnung nach Anspruch 7,
**dadurch gekennzeichnet, dass** das Ringelement (66) mit einem Reibelemententräger (24) im Wesentlichen drehfest ist, mit welchem ein auch mit diesem in Kontakt stehendes Reibelement (26) im Wesentlichen drehfest ist.
